# EUROPÄISCHE PATENTSCHRIFT

(11) **EP 0 515 350 B1**
(45) Veröffentlichungstag und Bekanntmachung des Hinweises auf die Patenterteilung: **29.03.1995**
(21) Anmeldenummer: 92890114.9
(22) Anmeldetag: 13.05.1992
(51) Int. Cl.: B65G 1/137, B65G 47/57

(54) **Auswerfer**
Ejector
Ejecteur

(30) Priorität: 23.05.1991 AT 1055/91
(43) Veröffentlichungstag der Anmeldung: 25.11.1992
(73) Patentinhaber: P.E.E.M. Förderanlagen Ges.m.b.H., 8051 Graz (AT)
(72) Erfinder: Neukam, Helmut, A-8071 Hausmannstätten (AT)
(74) Vertreter: Kliment, Peter, Dipl.-Ing.

(56) Entgegenhaltungen:
- DE-A- 2 418 820
- DE-B- 1 243 106
- US-A- 2 353 394
- US-A- 2 599 906

## Beschreibung

Die Erfindung bezieht sich auf einen Auswerfer für eine Staueinrichtung zur Aufnahme und stückweisen Ausgabe von Gütern, insbesondere einer Staueinrichtung einer Kommissionieranlage, bei welcher Staueinrichtung die Güter gegen ein Ausgabeende der Staueinrichtung vorgespannt sind, wobei der Auswerfer eine Anschlagschulter zur Abstützung des dem Ausgabeende nächsten Stückes aufweist.

Die Vorspannung der Güter gegen das Ausgabeende von solchen Staueinrichtungen kann dabei durch Schwerkraft, Federn, od. dgl. erfolgen. Bei den bisher bekannten Auswerfern für solche Staueinrichtungen (vgl. z.B. US-A-2 353 394) ist ein beweglicher Rückhalteteil, wie z.B. eine Klappe vorgesehen, die zur Freigabe der an dieser abgestützten, gegen das Ausgabeende vorgespannte Gut verschwenkt werden kann. Dabei ergibt sich jedoch der Nachteil, daß es beim Rückschwenken der Klappe in die Sperrstellung zu Problemen kommen kann. So ist es dabei erforderlich, daß das Rückschwenken der Klappe zu einem genau definierten Zeitpunkt erfolgen muß, um ein Schließen derselben ohne einer Beschädigung des nächsten Stückes zu ermöglichen. Außerdem kann es in einem Fehlerfalle sehr leicht zu einer Klemmung der Klappe, bzw. des nächsten Stückes kommen.

Solche Störungen Behindern insbesondere bei einer über einen Prozessor gesteuerten Kommissionieranlage die Ausgabe der verschiedenen Güter sehr wesentlich.

Ziel der Erfindung ist es, diese Nachteile zu vermeiden und einen Auswerfer der eingangs erwähnten Art vorzuschlagen, der sich durch ein hohes Maß an Betriebssicherheit auszeichnet.

Erfindungsgemäß wird dies dadurch erreicht, daß die Anschlagschulter ein Hubstempel vorgeordnet ist, der zwischen einer im wesentlichen in der Ebene der Auflagefläche der auszugebenden Güter und einer der Oberkante der Anschlagschulter entsprechenden Lage senkrecht zur Ausgaberichtung bewegbar ist.

Durch dieses senkrecht zur Ausgaberichtung erfolgende Bewegung des Auswerfers ergibt sich der Vorteil, daß einerseits eine einzelweise Ausgabe der Stückgüter sichergestellt ist und es zu keinem Verklemmen des Auswurforganes mit einem auszugebenden Stück kommen kann. Letzteres wird durch den Hubstempel einfach auf die Höhe der Anschlagschulter angehoben und wird dabei durch das nachfolgende Stück, das an dem in Ausgabe befindlichem Stück anliegt, ausgeschoben. Da, insbesondere bei quaderförmigen Stücken, die Anschlagschulter relativ niedrig gehalten werden kann, ergeben sich für den Hubstempel nur sehr kleine Wege, wodurch eine rasche Ausgabefolge erzielt werden kann.

Nach einem weiteren Merkmal der Erfindung kann vorgesehen sein, daß der Hubstempel mit einer von einem Druckmedium, vorzugsweise Druckluft, beaufschlagbaren Zylinder-Kolbenanordnung verbunden ist und mit mindestens einer Rückzugsfeder versehen ist.

Auf diese Weise ergibt sich ein sehr einfacher Aufbau des Auswerfers, der auch mit relativ hoher Frequenz betreibbar ist.

Weiters kann vorgesehen sein, daß die Anschlagschulter mit einem Halter, vorzugsweise einstückig, verbunden ist, wobei der Halter einen im wesentlichen T-förmigen Ansatz aufweist, der in eine ein der Unterseite einer Ausgaberutsche angeordneten und sich quer zu dieser erstreckenden im wesentlichen gegengleichen Aufnahme einschiebbar und mittels einer den T-förmigen Ansatz durchsetzenden Klemmschraube fixierbar ist.

Diese Maßnahmen ermöglichen eine einfache Herstellung des Auswerfers, der im wesentlichen durch eine Spritzgußteil gebildet sein kann. außerdem ist auch eine den jeweiligen Umständen entsprechende Anordnung des Auswerfers sehr leicht herstellbar.

Nach einem weiteren Merkmal der Erfindung kann vorgesehen sein, daß in dem Halter ein an einen Anschlußnippel anschließender Einlaßkanal eingearbeitet ist, der über ein Ventil mit einem in einer zweiten Ebene verlaufenden Speisekanal verbindbar ist, der zur Zylinder-Kolbenanordnung führt.

Auf diese Weise braucht der Anschluß an eine Fluidquelle nicht an dem Ventil zu erfolgen, sodaß dieses leicht zugänglich bleibt und bei Wartungsarbeiten rasch und ohne Eingriff in die Fluidversorgung entfernt und ausgetauscht werden kann.

Weiters kann vorgesehen sein, daß der Speisekanal einen den Halter quer zur Ausgaberichtung der Güter durchsetzenden Abschnitt aufweist, in dessen randoffenen Bereiche wahlweise Verschlußstopfen oder Nippel zum Anschluß eines weiteren Auswerfers einsetzbar sind.

Dies ermöglicht die Steuerung mehrerer Auswerfer über ein einziges Ventil, z.B. wenn größere Stücke ausgegeben werden sollen und zu deren Anhebung die Kraft eines Auswerfers nicht ausreicht. Dabei können zwei oder mehrere Auswerfer dicht an dicht nebeneinander angeordnet werden, die von einem Ventil gesteuert wurden.

Nach einem weiteren Merkmal der Erfindung kann vorgesehen sein, daß in den Einlaßkanal eine verstellbar gehalten Drosselschraube hineinragt, mit der der in der Zylinder-Kolbenanordnung wirksam werdende Druck eingestellt werden kann.

Bei einer bevorzugten Ausführungsform eines erfindungsgemäßen Auswerfers kann weiters vorgesehen sein, daß das Ventil eine in einem gegen das Innere des Ventiles vorspringenden Ansatz einer einen Ventilraum begrenzenden Wand angeordnete zentrale Einlaßbohrung, die an den Einlaßkanal anschließt und eine in dieser Wand angeordnete Auslaßöffnung, die mit dem Speisekanal verbunden ist aufweist, wobei ein in einer zur Atmosphäre hin offenen Hülse verschiebbarer, vorzugsweise gegen eine die Einlaßbohrung verschließende Stellung vorgespannter Ventilkörper vorgesehen ist und zwischen dem Ventilkörper und der Innenwand der Hülse mindestens ein Drosselspalt vergesehen ist, der vorzugsweise durch eine axial verlaufende Nut im Ventilkörper gebildet ist.

Durch diese Maßnahmen ergibt sich ein sehr einfacher Aufbau des Ventiles der auch auf sehr einfache Weise eine Entlüftung der Zylinder-Kolbenanordnung, eben über den Drosselspalt des Ventiles ermöglicht. Es kommt dadurch bei freigegebener Einlaßbohrung zwar zu einem gewissen Verlust an Druckfluid, doch fällt dies nicht sonderlich ins Gewicht, da die Öffnungszeiten des Ventiles nur kurz sind, sodaß sich nur entsprechend geringer Verlust ergibt. Durch die Entlüftung der Zylinder-Kolbenanordnung über den Drosselspalt des Ventiles ergibt sich jedoch der Vorteil, daß auf ein Ventil mit drei Stellungen, von denen eine Stellung die Entlüftung der Zylinder-Kolbenanordnung ermöglicht, verzichtet werden kann, wodurch ein entsprechend einfacher Aufbau des Ventiles mit lediglich einer Schließstellung ermöglicht wird.

Weiters kann vorgesehen sein, daß die Hülse des Ventiles von einer Wicklung umgeben und aus einem unmagnetischem Material hergestellt ist, wogegen der Ventilkörper aus einem ferromagnetischen Material hergestellt ist.

Auf diese Weise ergibt sich ein sehr einfacher Antrieb für den Ventilkörper, welcher sich durch kurze Ansprechzeiten und leichte Ansteuerbarkeit auszeichnet.

Die Erfindung wird nun anhand der Zeichnung näher erläutert. Dabei zeigen
Fig. 1 eine erfindungsgemäße Kommissionieranlage,
Fig. 2 eine Ansicht der Gestelle der Kommissionieranlage nach der Fig. 1,
Fig. 3 einen Auswerfer in Seitenansicht
Fig. 4 eine Stirnansicht des Auswerfers,

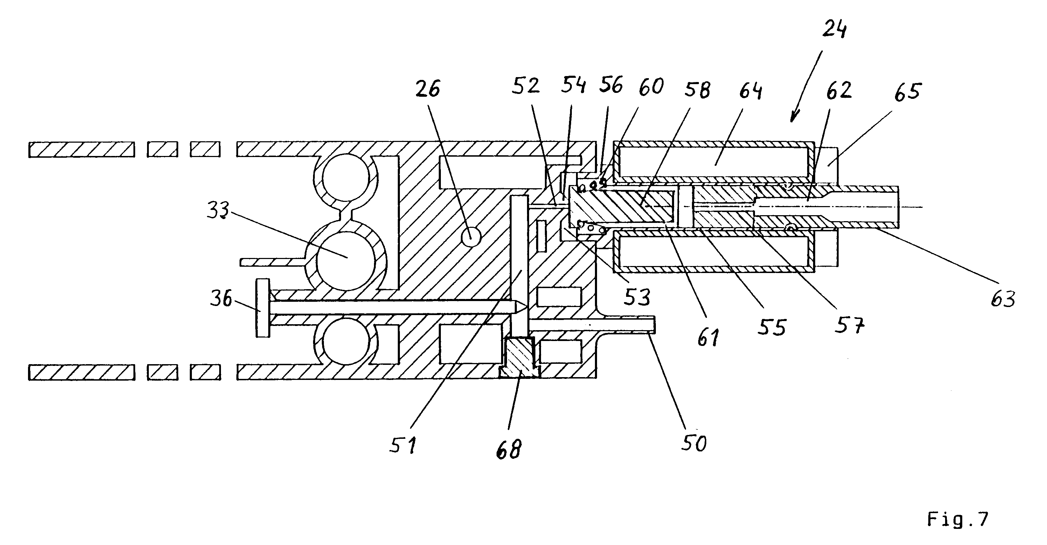

Fig. 5 einen Schnitt entlang der Linie F-F in der Fig. 4,
Fig. 6 einen Schnitt entlang der Linie A-A in der Fig. 4 und 5,
Fig. 7 einen Schnitt entlang der Linie B-B in der Fig. 5,
Fig. 8 einen Schnitt entlang der Linie C-C in der Fig. 5,
Fig. 9 einen Schnitt entlang der Linie D-D in der Fig. 5 und
Fig. 10 einen Schnitt entlang der Linie E-E in der Fig. 5.

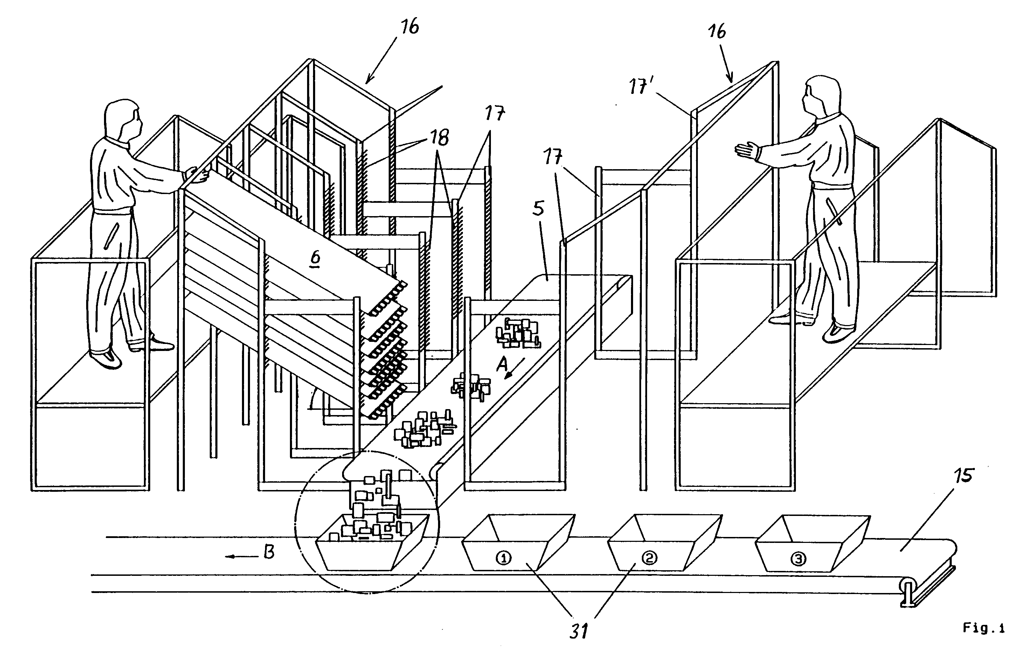

Bei der Kommissionieranlage nach der Fig. 1 sind zu beiden Seiten eines Förderbandes 5, dessen oberes Trum sich in Richtung des Pfeiles A bewegt, Gestelle 16 angeordnet, die im wesentlichen durch miteinander verbundene Steher 17, 17′ gebildet sind. Diese Steher 17, 17′ sind mit seitlich abstehenden kammartig gestalteten Ansätzen 18 versehen, wobei die Vorsprünge dieser kammartigen Ansätze 18 in Richtung des Förderbandes 5 fluchten und in den Raum zwischen zwei Steher 17 bzw. 17′ hineinragen.

In die Zwischenräume der kammartigen Ansätze 18 sind die Rutschen 6 in wählbaren vertikalen Abständen eingeschoben. Dabei sind, wie aus der Fig. 1 zu ersehen ist, die Rutschen 6 in einer gegen das Förderband 5 zu geneigten Lage gehalten.

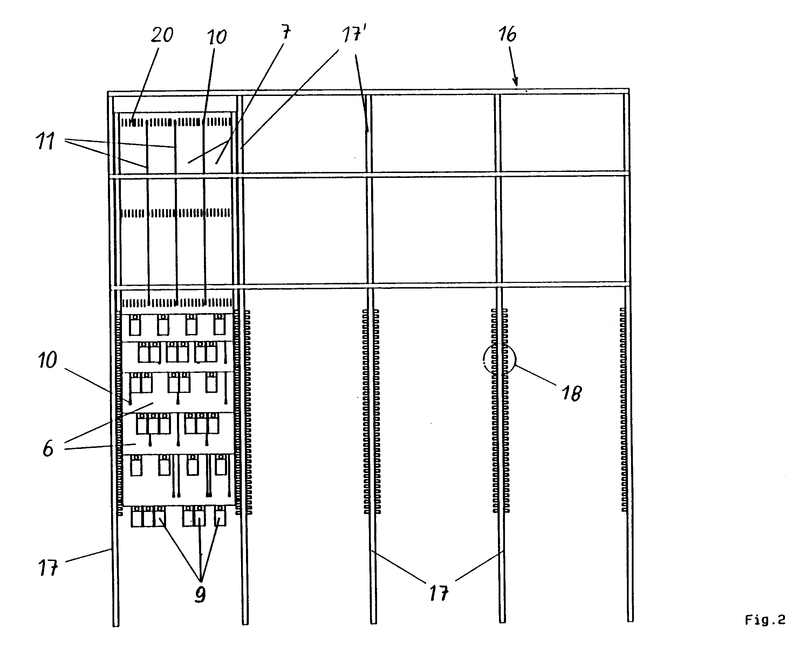

Wie aus der Fig. 2 zu ersehen ist, sind die Rutschen 6 mit quer zu deren Längsrichtung verlaufenden Reihen von nebeneinander angeordneten Durchbrüchen 20 versehen, in denen Halter 10 eingesteckt sind, die zur Aufnahme von Trennelementen 11 dienen, die z.B. als einfache Stangen ausgebildet sein können. Dadurch kann jede Rutsche 6 in mehrere Bahnen 7 unterteilt werden, wobei die Breite einer jeden Bahn in weiten Grenzen variiert werden und durch einfaches Umstecken der Halter 10 verändert werden kann.

Durch das Einhängen der Rutschen 6 in die kammartigen Ansätze 10 der Steher 17, 17′ kann auch deren Neigung gegen die Horizontale variiert werden, wodurch die Abrutschgeschwindigkeit des abzugebenden Stückgutes an die jeweiligen Erfordernisse, die auch von dem Reibungskoeffizienten der Werkstoffpaarung des Materiales der Rutsche und des Materiales des Stückgutes, bzw. dessen Verpackung beeinflußt werden.

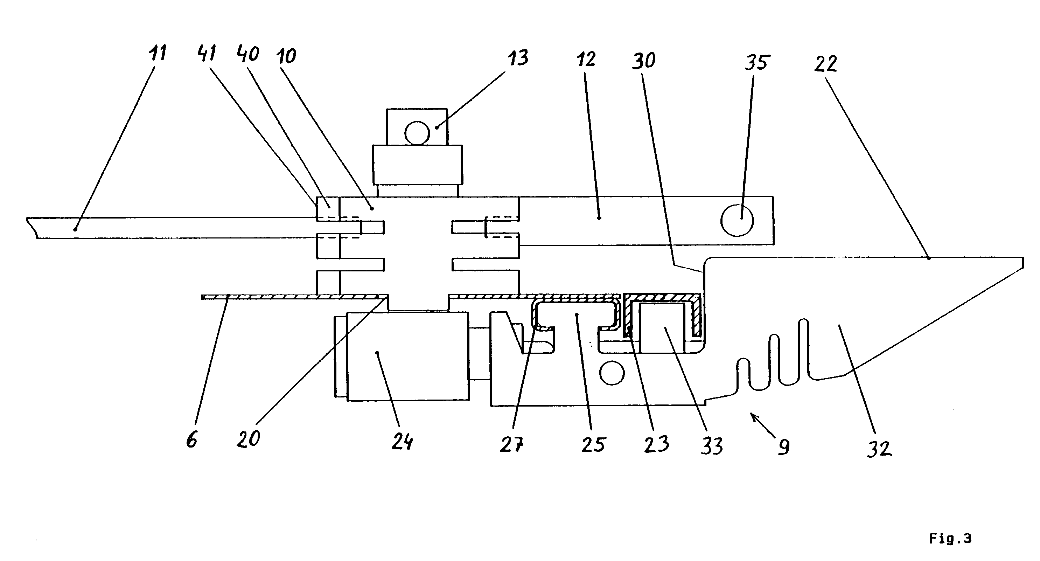

In den dem Förderband 5 zugekehrten Endbereichen der Rutschen 6 sind an diesen Auswerfer 9 angeordnet, die aus der Fig. 3 zu ersehen sind. Diese Auswerfer 9 heben das an einer Anschlagschulter 30, die an dem dem Förderband 5 zugekehrten Ende der Rutsche 6 angeordnet ist, anliegende Stück über diese Anschlagschulter 30 an, sodaß dieses Stück über den Ausgabeabschnitt 22 des Auswerfers auf das Förderband 5 gleiten kann.

Durch entsprechende Ansteuerung der einzelnen Auswerfer 9, von denen für jede Bahn 7 der Rutschen 6 mindestens einer vorgesehen ist, können den einzelnen Kommissionen entsprechende Stückguthaufen 1, 2, 3 auf dem Förderband 5 abgelegt werden. Diese Haufen fallen in in regelmäßigen Abständen auf einem weiteren Förderband 15 abgestellten und von diesem bewegte Behälter 31, wobei sich das obere Trum des Förderbandes 15 in Richtung der Pfeile B bewegt.

Wie aus der Fig. 3 zu ersehen ist, sind die Halter 10, in die Durchbrüche 20 der Rutsche 6 eingesteckt und weisen in ihren Endbereichen gegen die Richtung der einzelnen Bahnen geneigt verlaufende Anlaufflächen 40 auf die zu senkrecht zur Oberfläche der Rutsche 6 verlaufenden Kanten 41 führen, um ein Hängenbleiben einzelner Stücke des in der entsprechenden Bahn 7 gestauten Stückgutes zu verhindern. In diesen Halterungen 10 sind die als Trennelemente 11 dienenden Stangen eingesetzt, die im wesentlichen parallel zur Rutsche 6 verlaufen.

Der Auswerfer 9, bzw. dessen Halter 32 weist einen im Querschnitt T-förmigen Ansatz 25 auf, der in eine entsprechende, sich über die gesamte Breite der Rutsche erstreckende gegengleiche Aufnahme 27, die an der Unterseite der Rutsche 6 angeformt ist, eingreift. Dieser Halter weist auch den Ausgabeabschnitt 22 auf und trägt ein Magnetventil 24, das die Zufuhr eines Druckmediums, vorzugsweise Druckluft, zu einer Zylinder-Kolbenanordnung 33 steuert, der auf einen Hubstempel 23 einwirkt, auf dem in dessen Ruhelage das an der Anschlagschulter 30 anliegende Stück des in der entsprechenden Bahn 7 der Rutsche 6 gestapelte Stückgut aufliegt.

Durch entsprechende Ansteuerung des Magnetventils 24, wird der Weg für das Druckmedium freigegeben und dadurch der Hubstempel 23 auf die Höhe der Anschlagschulter 30 angehoben, sodaß das entsprechende Stück aufgrund der Neigung der Rutsche 6 über den Ausgabeabschnitt 22 des Halters 32 abgleiten kann.

In den randnächsten Halterungen 10 einer jeden Rutsche 6 sind in Richtung zum Förderband 5 hin bzw. in Ausgaberichtung abstehende Haltearme 12 gehalten, die im Bereich ihrer freien Enden Sender bzw. Empfänger 35 einer Lichtschranke tragen. Diese Lichtschranke erfaßt alle über die jeweilige Rutsche abgegebenen Stücke, unabhängig davon über welche Bahn 7 diese abgegeben werden. Durch die Ausgaberichtung des Stückgutes von den Halterungen 10 wegstehenden Haltearme 12 ist sichergestellt, daß die Trennelemente 11 der zwischen den Rändern der Rutsche angeordneten Bahnen 7 in Ausgaberichtung des Stückgutes gesehen vor der Lichtschranke enden.

Gegenüber der Längsmittelebene versetzt ist im Halter 32 im Bereich des T-förigen Ansatzes 25 durchgehende Gewindebohrung 26 angeordnet (Fig. 7), die zur Aufnahme einer Klemmschraube dient, die an den Grund der Aufnahme 27 anpreßbar ist und auf diese Weise ein Fixierung des Auswerfers 9 bewirkt.

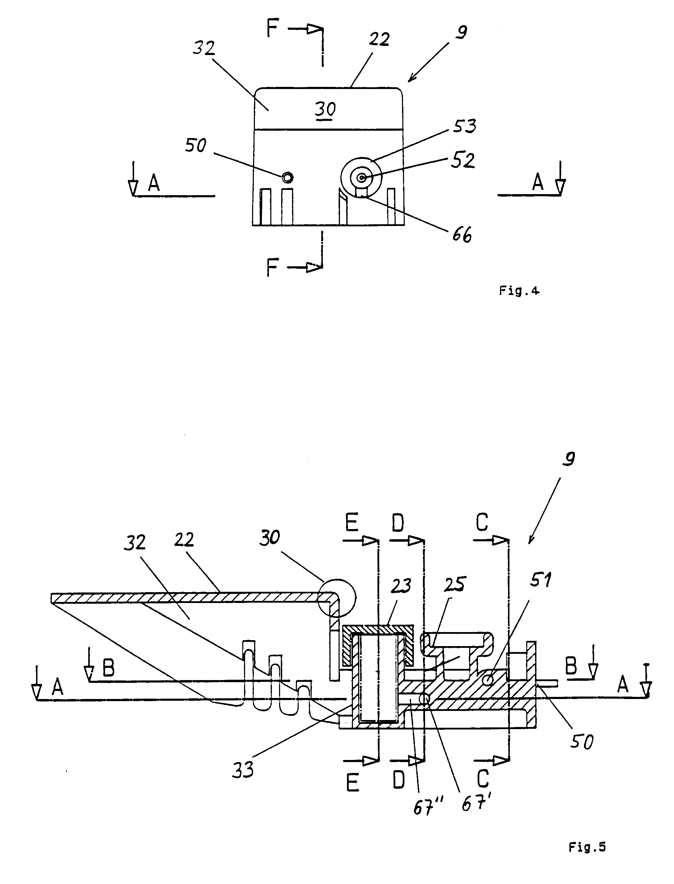

Wie aus der Fig. 4 zu ersehen ist, ist an der der Rutsche 6 zugekehrten Stirnseite des Auswerfers 9 ein Anschlußnippel 50 angeordnet, an dem ein Schlauch zur Versorgung mit einem Druckmedium, vorzugsweise Druckluft angeordnet. Dieses Anschlußnippel 50 ist mit einem Einlaßkanal 51 (Fig. 7) verbunden, der im wesentlichen U-förmig verläuft und zu einer Einlaßbohrung 52 des Ventiles 24 führt. In den Einlaßkanal 51 ragt eine Drosselschraube 36 hinein, mit der der Druck des zuströmenden Mediums reduziert werden kann, wodurch eine Anpassung der Geschwindigkeit der Bewegung des Hubstempels 23, der mit der Zylinder-Kolbenanordnung 33 verbunden ist, an die jeweiligen Gegebenheiten erreicht werden kann.

Diese Einlaßbohrung ist zentrisch in einer Aufnahmebohrung 53 des Halters 32 im Bereich eines in diese Bohrung 53 vorspringenden Ansatz 54 angeordnet. Dabei bildet die Aufnahmebohrung 53 gleichzeitig den Ventilraum des Ventiles 24.

In diese Aufnahmebohrung 53 ist eine Hülse 55 aus einem nicht magnetisierbaren Material, wie z.B. Messing eingeschraubt, die einen sechseckigen Bund 56 aufweist, wobei die Bohrung 57 der Hülse 55, in welcher ein aus einem ferromagnetischen Material hergestellter Ventilkörper 58 axial verschiebbar geführt ist, eine Ringschulter 59 aufweist, an der eine Druckfeder 60 abgestützt ist, die den Ventilkörper 58 gegen dessen Schließlage, in der er an dem Ansatz 54 anliegt und die Einlaßbohrung 52 dicht verschließt.

Der Ventilkörper 58 ist mit zwei axial verlaufenden Nuten 61 versehen, die Drosselspalte definieren, über die, wie noch später erläutert werden wird, die Zylinder-Kolbenanordnung 33 entlüftet werden kann.

In der Hülse 55 ist weiters noch ein mit einer axialen Bohrung 62 versehenes Nippel 63 eingesetzt und mittels einer Quetschverbindung fixiert, wobei dieses Nippel gleichzeitig als Anschlag für den Ventilkörper 58 dient und vorzugsweise aus einem magnetisierbaren Material hergestellt ist.

Auf die Hülse 55 ist eine in einem Isolierstoff eingegossene Wicklung 64 aufgeschoben und mittels einer Mutter 65 fixiert. Die Wicklung ist mit Ausleitungen (nicht dargestellt) versehen und von einer entsprechenden Steuerung mit elektrischen Impulsen ansteuerbar. Dabei wirkt der Ventilkörper 58 als Anker und wird bei Erregung der Wicklung 64 entgegen der Kraft der Feder 60 gegen das Innere der Wicklung 64 zu verschoben, wodurch die Einlaßbohrung 52 freigegeben und das unter Druck stehende Fluid in das innere der Aufnahmebohrung 53 einströmen kann.

Der größte Teil des Fluids strömt dabei über die unterhalb der Einlaßbohrung 52 angeordnete Auslaßöffnung 66 (Fig. 4) in den Speisekanal 67. Dieser weist einen sich quer zur Ausgaberichtung der Güter erstreckenden, den Halter 32 durchsetzenden Abschnitt 67′ auf. In den Öffnungen dieses Abschnittes 67′ sind wahlweise, wie dargestellt, Verschlußstopfen 68 oder Nippel (nicht dargestellt) eingesetzt. Letztere diesen dazu mehrere Auswerfer 9 nebeneinander anzuordnen und gemeinsam über ein Ventil 24 zusteuern.

An diesen Abschnitt 67′ ist die Zylinder-Kolbenanordnung 33 über einen weiteren Abschnitt 67˝ des Speisekanales 67 angeschlossen.

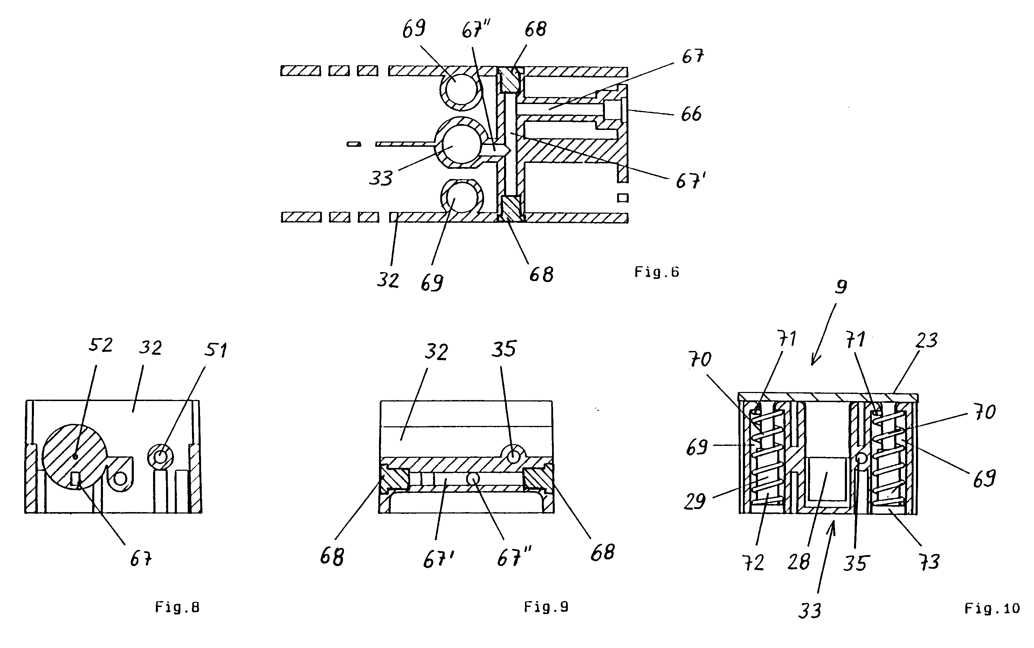

Wie aus der Fig. 6 und 10 zu ersehen ist, sind zu beiden Seiten der Zylinder-Kolbenanordnung 33 Bohrungen 69 zur Aufnahme von Rückzugsfedern 70 vorgesehen. Diese Rückzugsfedern 70 sind als Druckfedern ausgebildet und sind einerseits an Ringschultern 71 der Bohrungen 69 und anderseits an mit dem Hubstempel 23 verbundenen Fortsätzen 72, bzw. an mit diesen in deren freien Endbereichen gehaltenen Tellern 73 abgestützt. Weiters ist der Hubstempel 23 mit dem Kolben 28 der Zylinder-Kolbenanordnung 33 verbunden.

## Patentansprüche

1. Auswerfer für eine Staueinrichtung zur Aufnahme und stückweisen Ausgabe von Gütern, insbesondere einer Staueinrichtung einer Kommissionieranlage, bei welcher Staueinrichtung die Güter gegen ein Ausgabeende der Staueinrichtung vorgespannt sind, wobei der Auswerfer (9) eine Anschlagschulter (30) zur Abstützung des dem Ausgabeende nächsten Stückes aufweist,
**dadurch gekennzeichnet**,
daß die Anschlagschulter (30) ein Hubstempel (23) vorgeordnet ist, der zwischen einer im wesentlichen in der Ebene der Auflagefläche der auszugebenden Güter und einer der Oberkante der Anschlagschulter (30) entsprechenden Lage senkrecht zur Ausgaberichtung bewegbar ist.

2. Auswerfer nach Anspruch 1, **dadurch gekennzeichnet**, daß der Hubstempel (23) mit einer von einem Druckmedium, vorzugsweise Druckluft, beaufschlagbaren Zylinder-Kolbenanordnung (33) verbunden ist und mit mindestens einer Rückzugsfeder (70) versehen ist.

3. Auswerfer nach Anspruch 1 oder 2, **dadurch gekennzeichnet**, daß die Anschlagschulter (30) mit einem Halter (32), vorzugsweise einstückig, verbunden ist, wobei der Halter (32) einen im wesentlichen T-förmigen Ansatz (25) aufweist, der in eine ein der Unterseite einer Ausgaberutsche (6) angeordneten und sich quer zu dieser erstreckenden im wesentlichen gegengleichen Aufnahme (27) einschiebbar und mittels einer den T-förmigen Ansatz (25) durchsetzenden Klemmschraube fixierbar ist.

4. Auswerfer nach einem der Ansprüche 1 bis 3, **dadurch gekennzeichnet**, daß in dem Halter (32) ein an einen Anschlußnippel (50) anschließender Einlaßkanal (51) eingearbeitet ist, der über ein Ventil (24) mit einem in einer zweiten Ebene verlaufenden Speisekanal (67) verbindbar ist, der zur Zylinder-Kolbenanordnung (33) führt.

5. Auswerfer nach Anspruch 4, **dadurch gekennzeichnet**, daß der Speisekanal (67) einen den Halter (32) quer zur Ausgaberichtung der Güter durchsetzenden Abschnitt (67′) aufweist, in dessen randoffenen Bereiche wahlweise Verschlußstopfen (68) oder Nippel zum Anschluß eines weiteren Auswerfers (9) einsetzbar sind.

6. Auswerfer nach Anspruch 4 oder 5, **dadurch gekennzeichnet**, daß in den Einlaßkanal (51) eine verstellbar gehalten Drosselschraube (36) hineinragt.

7. Auswerfer nach einem der Ansprüche 4 bis 6, **dadurch gekennzeichnet**, daß das Ventil (24) eine in einem gegen das Innere des Ventiles vorspringenden Ansatz (54) einer einen Ventilraum begrenzenden Wand angeordnete zentrale Einlaßbohrung (52), die an den Einlaßkanal (51) anschließt und eine in dieser Wand angeordnete Auslaßöffnung (66), die mit dem Speisekanal (67) verbunden ist aufweist, wobei ein in einer zur Atmosphäre hin offenen Hülse (55) verschiebbarer, vorzugsweise gegen eine die Einlaßbohrung (52) verschließende Stellung vorgespannter Ventilkörper (58) vorgesehen ist und zwischen dem Ventilkörper (58) und der Innenwand der Hülse (55) mindestens ein Drosselspalt vergesehen ist, der vorzugsweise durch eine axial verlaufende Nut (61) im Ventilkörper (58) gebildet ist.

8. Auswerfer nach Anspruch 7, **dadurch gekennzeichnet**, daß die Hülse (55) des Ventiles (24) von einer Wicklung (64) umgeben und aus einem unmagnetischem Material hergestellt ist, wogegen der Ventilkörper (58) aus einem ferromagnetischen Material hergestellt ist.

## Claims

1. An ejector for a stowing device for receiving and piece-by-piece delivery of goods, in particular a stowing device of a commissioning plant, in which stowing device the goods are pretensioned against a delivery end of the stowing device, with the ejector (9) having a stop shoulder (30) for supporting the piece which is nearest towards the delivery end, characterized in that the stop shoulder (30) is provided with a lifting stamp (23) in front of it, which stamp is movable perpendicularly to the direction of delivery between a position which is substantially in the plane of the bearing surface of the goods to be delivered and a position which corresponds to the upper edge of the stop shoulder (30).

2. An ejector as claimed in claim 1, characterized in that the lifting stamp (23) is connected to a cylinder-piston arrangement (33) which can be charged by a pressure medium, preferably compressed air, and is provided with at least one pull-back spring (70).

3. An ejector as claimed in claim 1 or 2, characterized in that the stop shoulder (30) is connected to a holding device (32), preferably in one piece, with the holding device (32) having a substantially T-like shoulder (25) which is insertable into a receiver (27) of a substantially complentary shape to that one of the holding device, said receiver (27) is arranged in the lower side of the delivery chute (6) and extends transversally thereto and is fixable by means of a clamping screw which penetrates the T-like shoulder (25).

4. An ejector as claimed in one of the claims 1 to 3, characterized in that an inlet duct (51) following a connecting nipple (50) is recessed in the holding device (32), which duct is connectable to a feed duct (67) extending in a second plane via a valve (24) and leading to the piston-cylinder arrangement (33).

5. An ejector as claimed in claim 4, characterized in that the feed duct (67) is provided with a section (67') which penetrates the holder (32) transversally to the delivery direction of the goods, in whose open-edged zones there are insertable optionally either plugs (68) or nipples for connecting a further ejector (9).

6. An ejector as claimed in claim 4 or 5, characterized in that an adjustably held throttle screw (36) projects into the inlet duct (51).

7. An ejector as claimed in one of the claims 4 to 6, characterized in that said valve (24) being provided with a central inlet bore (52) following said inlet duct (51), said inlet bore (52) being arranged in a in a projection (54) projecting into the interior of a valve chamber limited by a wall bearing said projection (54) and with an outlet bore (66) arranged at said wall of the valve chamber and being connected with a feed duct (67) and with a valve body (58) displaceable within a sleeve (55) open towards the atmosphere and preferably pretensioned against a position closing the inlet bore (52), and that between the valve body (58) and the inner wall of the sleeve (55) there is provided at least one throttle gap which is preferably formed by a groove (61) extending axially in the valve body.

8. An ejector as claimed in claim 7, characterized in that sleeve (55) of the valve (24) is encompassed by a winding (64) and is made from a non-magnetic material, whereas the valve body (58) is made from a ferromagnetic material.

## Revendications

1. Dispositif d'éjection pour un dispositif d'accumulation servant à recevoir et délivrer un par un des objets, notamment pour un dispositif d'accumulation d'une installation de préparation de commandes pour l'expédition, dispositif d'accumulation dans lequel les objets sont appliqués selon une précontrainte contre une extrémité de sortie dans le dispositif d'accumulation, le dispositif d'éjection (9) comportant un épaulement de butée (30) pour l'appui de l'objet qui est le plus proche de l'extrémité de sortie,
caractérisé en ce qu'en avant de l'épaulement de butée (30) est disposé un piston de levage (23), qui est déplaçable perpendiculairement à la direction de délivrance, entre une position située essentiellement dans le plan de la surface de support des objets devant être délivrés, et une position qui correspond au bord supérieur de l'épaulement de butée (30).

2. Dispositif d'éjection selon la revendication 1, caractérisé en ce que le piston de levage (23) est relié à un dispositif à cylindre et piston (33), qui peut être chargé par un fluide sous pression, de préférence de l'air comprimé, et comporte au moins un ressort de rappel (70).

3. Dispositif d'éjection selon la revendication 1 ou 2, caractérisé en ce que l'épaulement de butée (30) est relié, de préférence d'un seul tenant, à un dispositif de retenue (32), le dispositif de retenue (32) possédant un appendice saillant essentiellement en forme de T (25), qui peut être inséré dans un logement (27) qui est présent dans la face inférieure d'une goulotte de délivrance (6) et qui s'étend transversalement par rapport à cette goulotte et possède essentiellement une forme opposée correspondante et peut être fixé au moyen d'une vis de serrage, qui traverse l'appendice saillant en forme de T (25).

4. Dispositif d'éjection selon l'une des revendications 1 à 3, caractérisé en ce que dans le dispositif de retenue (32) est ménagé un canal d'admission (51), qui se raccorde à un raccord (50) et peut être relié par l'intermédiaire d'une soupape (24), à un canal d'alimentation (67) qui s'étend dans un second plan et qui aboutit au dispositif à cylindre et piston (33).

5. Dispositif d'éjection selon la revendication 4, caractérisé en ce que le canal d'alimentation (67) possède une section (67'), qui traverse le dispositif de retenue (32) transversalement par rapport à la direction de sortie des objets, et que des bouchons de fermeture (68) ou des raccords filetés permettant le raccordement d'un autre dispositif d'éjection (9) peut être inséré dans les parties de ladite section, ouvertes marginalement.

6. Dispositif d'éjection selon la revendication 4 ou 5, caractérisé en ce qu'une vis réglable d'étranglement (36) pénètre dans le canal d'admission (51).

7. Dispositif d'éjection selon l'une des revendications 4 à 6, caractérisé en ce que la soupape (24) comporte un perçage central d'admission (52), qui est situé dans un embout saillant (54), qui fait saillie à l'intérieur de la soupape, une paroi délimitant l'espace de la soupape, et qui se raccorde au canal d'admission (51), et possède une ouverture de sortie (66), qui est aménagée dans cette paroi et est reliée au canal d'alimentation (67), et qu'il est prévu un corps de soupape (58), qui est déplaçable dans une douille (55) qui s'ouvre à l'atmosphère et est précontraint de préférence vers une position de fermeture du perçage d'admission (52), et qu'entre le corps de soupape (58) et la paroi intérieure de la douille (55) est prévue au moins une fente d'étranglement, qui est formée de préférence par une rainure axiale (61) ménagée dans le corps de soupape (58).

8. Dispositif d'éjection selon la revendication 7, caractérisé en ce que la douille (55) de la soupape (24) est entourée par un enroulement (64) et est réalisée en un matériau amagnétique, tandis que le corps de soupape (58) est réalisé en un matériau ferromagnétique.
